# EUROPÄISCHE PATENTSCHRIFT

(11) **EP 1 323 050 B1**
(45) Veröffentlichungstag und Bekanntmachung des Hinweises auf die Patenterteilung: **01.04.2009**
(21) Anmeldenummer: 01978178.0
(22) Anmeldetag: 21.09.2001
(51) Int. Cl.: G06F 13/40

(54) **PROZESSORBUSANORDNUNG**
PROCESSOR BUS ARRANGEMENT
AGENCEMENT DU BUS DU PROCESSEUR

(30) Priorität: 22.09.2000 DE 10047574
(43) Veröffentlichungstag der Anmeldung: 02.07.2003
(73) Patentinhaber: NXP B.V., 5656 AG Eindhoven (NL)
(72) Erfinder: DRESCHER, Wolfram, 01099 Dresden (DE); FETTWEIS, Gerhard, 01324 Dresden (DE)
(74) Vertreter: Adler, Peter
(86) Internationale Anmeldenummer: PCT/DE2001/003651
(87) Internationale Veröffentlichungsnummer: WO 2002/025455

(56) Entgegenhaltungen:
- DE-A- 4 000 673
- US-A- 5 502 817
- US-A- 5 671 386
- US-A- 6 081 863

## Beschreibung

Die Erfindung betrifft eine Prozessorbusanordnung mit einer ersten und einer zweiten Daten-Prozess-Einheit, die jeweils mit einem als Bus vereinbarten Leitungssystem verbunden sind.

Die gebräuchlichsten Verbindungsstrukturen zwischen den Funktionseinheiten von Schaltungen, insbesondere Rechnern, sind Busse. Ein solcher Bus kann einerseits chipintern oder chipübergreifend z.B. als Systembus eines Rechners realisiert werden, der den Datenaustausch zwischen den einzelnen Funktionseinheiten ausführt. Im einfachsten Fall bildet der Bus einen Knoten von Leitungsabschnitten, die mit sternförmig angeordneten Abgriffen die Verbindung zu den Funktionseinheiten realisieren. Üblich sind aber auch die in "Advanced Computer Architecture" von Kain (ISBN 0-13-007741-0) S. 376-385 zusammengefasst dargestellten Busanordnungen von Funktionseinheiten mit folgenden Topologien: 1. Individuelle Einzelverbindung, 2. Bus mit Buscontroller, 3. Mehrfach Busse, 4. Kreuzungsschaltersystem, 5. n-dimensional zugeordnete Funktionseinheiten, 6. Baumstrukturen, 7. Ringstrukturen, 8. mehrstufiges Netzwerk mit Zwischenverbindungen, 9. Hierarchische Strukturen.

Damit auf dem Bus keine Informationskollisionen auftreten, darf immer nur eine Funktionseinheit ihre Information auf den Bus schalten. Zur Regelung eines solchen Informationsaustausches sind die Funktionseinheiten mit Schnittstellen versehen, welche, zumeist mechanisch und elektrisch spezifiziert, genormt sind und damit die zeitliche Abfolge der zugelassenen Bussignale für die einzelnen Komponenten absichern.

Mit der US Patentschrift 6.081.863 ist eine spezielle Lösung für den gerätespezifischen PCI (Peripheral Component Interconnect)-Bus bekannt, wobei der bekannte spezielle "PCI local bus standard", der zur Kommunikation von peripheren Einheiten wie Grafikkarten, Festplattenlaufwerke über eine Host Bridge mit dem Systembus innerhalb eines PC-Gerätes oder Servers vorgesehen ist, als Grundlage dient.

Bei dieser Lösung wird die übliche Anzahl der Anschluss-Schnittstellen (Slots) innerhalb des Computers erhöht und die zahl der Host Bridge, die notwendig sind um einen multiplen PCI-Bus zu steuern, minimiert, indem eine Vielzahl (bis 14) solcher peripheren Einheiten in mehreren lokalen Busabschnitten zusammengefasst werden.

Es wird hierbei die PCI-spezifische schaltungstechnische Begrenzung von 4 PCI-Slots pro PCI-Bus dadurch umgangen, dass diese Busabschnitte über elektronische Schalter mittels einer speziell ausgelegten Host Bridge zu- und abgeschaltet werden. Auf dies Weise werden die schaltungs-technischen Bedingungen des "PCI local bus standards" gewährleistet.

Diese Lösung, die weder für den Systembus eines Computers noch für einen Prozessorbus chipintern vorgesehen ist, verfügt in den Busabschnitten nur über die sternförmig geschalteten PCI-Slots und realisiert den o.g. einfachsten Fall eines Busses, der aus einem Knoten von Leitungsabschnitten besteht.

Eine eigenständige Kommunikation, z.B. der über die PCI-Slots angeschlossenen peripheren Komponenten innerhalb eines Busabschnittes, ist ebenfalls nicht möglich und war bei der erfindungsgemäßen Aufgabenstellung dieser Lösung auch nicht vorgesehen.

Weiterhin wird mit der US Patentenschrift 5.502.817 ein spezieller Bereich des Standes der Technik umrissen. In dieser Schrift wird ein Hoch-Geschwindigkeitssystem zur Datensammlung und Datenverteilung für die Kopplung einer Vielzahl von Datenquellen mit einer vielzahl von Prozessoren behandelt, bei dem Computer (Workstations) und Datenquellen jeweils über einen Knoten an Segmente paralleler Datenpfade angeschlossen weren.

Die Knoten, die einen Input Connector und einen Output Connector enthalten, sind über diese mit ihren jeweiligen benachbarten Knoten verbunden, sodass in der Zusammenschaltung aller Knoten sich eine Ringsschaltung ergibt und ein unidirektionaler Datenfluss realisiert wird, bei dem die Daten, ähnlich dem vom LAN bekannten Token-Ring Prinzip, verschoben werden.

Ein jeglicher Knoten verfügt über eine Daten-Prozesseinheit mit dem die Daten des Computers bzw. der Datenquellen an den unidirektionalen Datenfluss des Knoten eingepasst und synchronisiert werden.

In der Datenflussrichtung vom Input Connector zum Output Connector, welche beide als *ein Paar* im Knoten enthalten sind, ist ein Speicherregister/Multiplexer zwischengeschaltet, der jeweils unabdingbar über einen FIFO Speicher verfügen muss.

Die angestrebte Beschleunigung und hohe Geschwidigkeit der Datensammlung und verteilung wird dadurch erreicht, dass Daten mit hoher Nachrichten Empfangsrate, welche den Knoten mitgeteilt wird, Nachrichten mit niedrigerer Nachrichten Empfangsrate im Datenfluß über die Knoten zum Zielrechner "überholen" können, indem die Daten mit niedrigerer Nachrichten Empfangsrate im jeweiligen FIFO-Speicher zwischen gespeichert werden.

Nachdem die Daten mit höherer Nachrichten Empfangsrate den Knoten passiert haben, werden die gespeicherten Daten entsprechend dem FIFO Prinzip aus dem Speicher entnommen und zum nächsten Knoten verschoben.
Auch bei dieser Lösung ist ersichtlich, dass sie ebenfalls weder für den Systembus eines Computers noch für einen chipinternen Prozessorbus vorgesehen ist.

Auch eine eigenständige bidirektionale Kommunikation, z.B. von Datenquellen/Computern, die an nicht benachbarten Knoten angeschlossenen sind, ist ebenfalls nicht möglich.
Beim beschriebenen Stand der Technik wird der größte Nachteil der bekannten Bussysteme deutlich, dass zu einem Zeitpunkt immer nur ein einziger Datentransport stattfinden kann. Das führt zu Engpässen bei der Datenübertragung am Bus, wobei die Verarbeitungsgeschwindigkeit der einzelnen Funktionseinheiten nicht ausgeschöpft wird. Außerdem sind einer besseren Ausnutzung der Verarbeitungsgeschwindigkeit des Systems durch Erhöhung der Datenübertragungsrate am Bus mittels Erhöhung des Rechnertaktes eindeutig physikalische Grenzen gesetzt.

Auch die beim Stand der Technik bekannte Methode des Prefeching ist für die gewünschte Ausschöpfung der Verarbeitungsgeschwindigkeit der CPU nur begrenzt wirksam, weil die hierbei im voraus geladenen Befehle wieder nötigenfalls verworfen werden müssen, wenn die Programmbedingungen in der Ausführung des Programms dies erfordern. Damit wird der gewonnene Geschwindigkeitszuwachs bei der Befehlsbearbeitung an der CPU z.T. wieder unwirksam gemacht.

Auch eine andere beim Stand der Technik bekannte Methode, in einem Cache-Speicher zuletzt häufig benötigte Befehle und auch Daten zwischenzuspeichern und damit weitere Datenübertragung über den Bus zu vermeiden, bringt bei der Steigerung der Verarbeitungsgeschwindigkeit der CPU nur einen begrenzten Zuwachs.

Weiterhin ist eine in "Computer Architecture" von Michael J.Flynn (ISBN 0-86720-204-39) S.434-438 beschriebene Lösung des Vectorprozessors zu nennen.

Hierbei werden mit gleicher Operation zu verarbeitende Datensätze, welche aber von unterschiedliche Funktionseinheiten bereitgestellt werden, in so bezeichneten Vektorregistern zusammengestellt. Diese Datensätze werden innerhalb solch einer Vektorstruktur bestimmter Länge als indizierte Blöcke zur verarbeitung mit der erforderlichen Operation z.B. ADD, MULTIPLY zugeführt.

Es wird beim Stand der Technik somit der größte Nachteil bei der Erhöhung der Datenübertragungsrate am Bus deutlich, der darin besteht, dass die parallele Nutzung des Busses durch unabhängig voneinander agierende Funktionseinheiten nicht möglich ist.

Der Erfindung liegt nunmehr die Aufgabe zugrunde, es zu ermöglichen, dass an einem Bus liegende Funktionseinheiten gleichzeitig und unabhängig voneinander kommunizieren können.

Die erfindungsgemäße Lösung der Aufgabenstellung besteht darin, dass der Bus eine Verbindungseinheit und Bussegmente aufweist, wobei die Bussegmente über die Verbindungseinheit zu dem Bus auftrennbar verbunden ist und dass in der Verbindungseinheit Mehrfach-Wege, die die Datenübertragung in der Verbindungseinheit unidirektional oder bidirektional ausführend, angeordnet sind.

Weiterhin ist mit einer ersten Verbindungseinheit eine zweite und eine dritte Verbindungseinheit als Wiederholstruktur verkettet angeordnet und außerdem sind die verbindungseinheiten der Wiederholstruktur sternförmig oder/und ringförmig verkettet angeordnet und es werden die Verbindungseinheiten bezüglich benachbart angeordneter Verbindungseinheiten überbrückend schaltbar anbeordnet.

Bei dieser erfindungsgemäßen Lösung ist gewährleistet, dass die Funktionseinheiten, die an dem Bus angeordnet sind und ihren Informationsaustausch über den Bus betreiben, diesen

Austausch unabhängig von anderen Funktionseinheiten tätigen können. Vielmehr können auch andere Funktionseineinheiten in weiteren Gruppierungen einen eigenen Informationsaustausch über diesen Bus ebenfalls zeitgleich ausführen. Während die verbindungseinheiten die Funktion der definierten kombinatorischen Zusammenschaltung der Signalleitungen bewirken, stellen die Bussegmente die leitungsmäßigen Verbindungen zwischen den Verbindungseinheiten her.

Es wird weiterhin gewährleistet, dass die verbindungseinheit den Informationsaustausch mit beliebig vielen, an ihr angeordneten Funktionseinheiten, ausführt. Die Informationswege von einer Funktionseinheit können durch Umschalten zu ausgewählten Funktionseinheiten oder durch Aufschalten zu mehreren Funktionseinheiten gleichzeitig zugeordnet werden. Je nach Ausstattung können die Mehrfachwege unidirektional oder bidirektional ausgeführt sein. Bei der unidirektionalen Ausführung der Verbindungseinheit wird berücksichtigt, dass in der Auswahl kommunizierender Funktionseinheiten immer nur eine Funktionseinheit senden kann, während alle anderen an der Kommunikation beteiligten Funktionseinheiten Informationen nur empfangen können.

Bei der bidirektionalen Ausführung der Verbindungseinheit wird realisiert, dass die angeschlossenen Funktionseinheiten empfangen und senden könnten. Die Verbindungseinheit gewährleistet mit einem weiteren Richtungskanal (right, left) die damit verbundene Richtungsabhängigkeit des Informationsaustausches.

In besonderer Weise wird berücksichtigt, dass ein Informationsaustausch am Bus nicht nur mit Funktionseinheiten in unmittelbarer Nachbarschaft zur verbindungseinheit erfolgen soll, sondern, dass bei einer solchen vorteilhaften Anordnung der Verbindungseinheiten ihre Ausgestaltung als Wiederholstruktur technische und ökonomisch optimiert werden kann. Auch vereinfacht es die gesamte Busstruktur, wenn die Verbindungseinheit als Wiederholstruktur verkettbar ausgelegt wird. Insofern können die Verbindungseinheiten als Bestandteil einer Matrix mit günstig angeordneten Schnittstellen konzipiert werden und es vereinfacht auch die Ausgestaltung der Bussegmente zu ebenfalls einer Anzahl von wiederholbar angeordneten Grundformen.

Besondere Berücksichtigung bei der Ausgestaltung der erfindungsgemäßen Prozessorbusanordnung finden mögliche Signallaufzeiten beim Informationsaustausch von günstig zueinander angeordneten Funktionseinheiten, die häufig miteinander kommunizieren. Durch die Wahl der Form der Prozessorbusanordnung, ob ringförmig, als Kette oder gemischte Formen, kann die optimale Anpassung hierbei realisiert werden.

Um Signallaufzeiten klein zu halten, wird beim Durchlaufen von Verbindungseinheiten, bei denen die angeschlossenen Funktionseinheiten am Informationsaustausch nicht beteiligt sind, diese überbrückt geschalten, d.h. die Anzahl der durchlaufenen Gatter und die Signalweglängen je Verbindungseinheit sind hierbei minimiert.

Eine vorteilhafte Ausgestaltung der erfindungsgemäßen Lösung der Aufgabenstellung sieht vor, dass an den jeweiligen Enden der verketteten Wiederholstruktur von Verbindungseinheiten Abschlusseinheiten angeordnet sind.

Hierbei kommen als Abschlusseinheiten abgerüstete verbindungseinheiten zum Einsatz, die anschlussseitig nur an die eine direkt benachbarte Verbindungseinheit angeschlossen werden kann. Weitere Anschlüsse zur Verbindung mit anderen Verbindungseinheiten sind nicht vorgesehen. Die Abschlusseinheit stellt einen Default-Zustand für die Ansteuerung der Verbindungseinheiten des Busses bereit, der eingenommen wird, seitens der ansteuernden Recheneinheit keine Signale vorliegen.

Eine weitere vorteilhafte Ausgestaltung der erfindungsgemäßen Lösung der Aufgabenstellung sieht vor, dass die Abschlusseinheit ohne weitere Beschaltung abschließend an die Wiederholstruktur geschaltet wird oder dass sie zusätzlich an Verbindungseinheiten signallaufzeitverkürzend über einen Abgriff direkt angeschlossen wird. Hierbei wird eine spezielle Gestaltung einer Abschlusseinheit realisiert, indem anschlussseitig, außer an der nur direkt benachbarten Verbindungseinheit, noch ein Anschluss an eine gewünschte Verbindungseinheit über die erforderlichen Bussegmente vorgenommen wird. Diese Anschlussmöglichkeit wird zur Signalwegverkürzung bei der Verbindung von Funktionseinheiten, welche unter Signallaufzeit kritischen Bedingungen kommunizieren, angewandt.

Eine wesentliche vorteilhafte Realisierung der erfindungsgemäßen Lösung der Aufgabenstellung sieht vor, dass die Verbindungseinheit aus Multiplexer aufgebaut werden.

Die Realisierung der Verbindungseinheit mittels Multiplexer-Bauelementen wird bevorzugt angewendet. Hierbei werden die Schaltfunktionen mit minimaler Bauelementezahl umgesetzt.

Eine weitere wesentliche vorteilhafte Realisierung der erfindungsgemäßen Lösung der Aufgabenstellung sieht vor, dass die Multiplexer-Torfunktion auf die logischen Operationen OR und XOR umschaltbar erweitert wird. Für erweiterte Aufgabenstellungen am Bus wird eine Funktionsumschaltung vorgesehen, die Signalverknüpfungen mit anderen logischen Operationen wie OR oder XOR vornimmt.

Weitere Ausgestaltungen hierzu weisen die Merkmale der Patentansprüche 6 oder 7 auf.

Die Erfindung soll nachfolgend anhand eines Ausführungsbeispieles näher erläutert werden. In den zugehörigen Zeichnungen zeigt:
- Fig. 1: ein Blockschaltbild der Prozessorbusanordnung mit der Zuordnung der Funktionseinheiten zu den Verbindungseinheiten und Bussegmenten,
- Fig. 2: ein Übersichtschaltbild der Multiplexer-Ausführung einer Verbindungseinheit, die die Verknüpfung des bidirektionalen ICU-rechts/links-Datenwegs mit einem kreuzenden Streifen eines ebenfalls bidirektionalen Datenweges zum Anschluss zweier Funktionseinheiten realisiert (Die angeschlossene MEM-Funktionseinheit wird in Fig. 1 nicht erwähnt),
- Fig. 3: ein Übersichtsschaltbild der Multiplexer-Ausführung einer Verbindungseinheit, die die Verknüpfung des bidirektionalen ICU-rechts/links-Datenwegs mit zwei kreuzenden Streifen von ebenfalls bidirektionalen Datenwegen zum Anschluss zweier Funktionseinheiten realisiert, (Die angeschlossene MEM-Funktionseinheit wird in Fig. 1 nicht erwähnt) und
- Fig. 4: ein Übersichtsschaltbild zur OR-Funktionserweiterung
einer Multiplexer Verbindungseinheit.

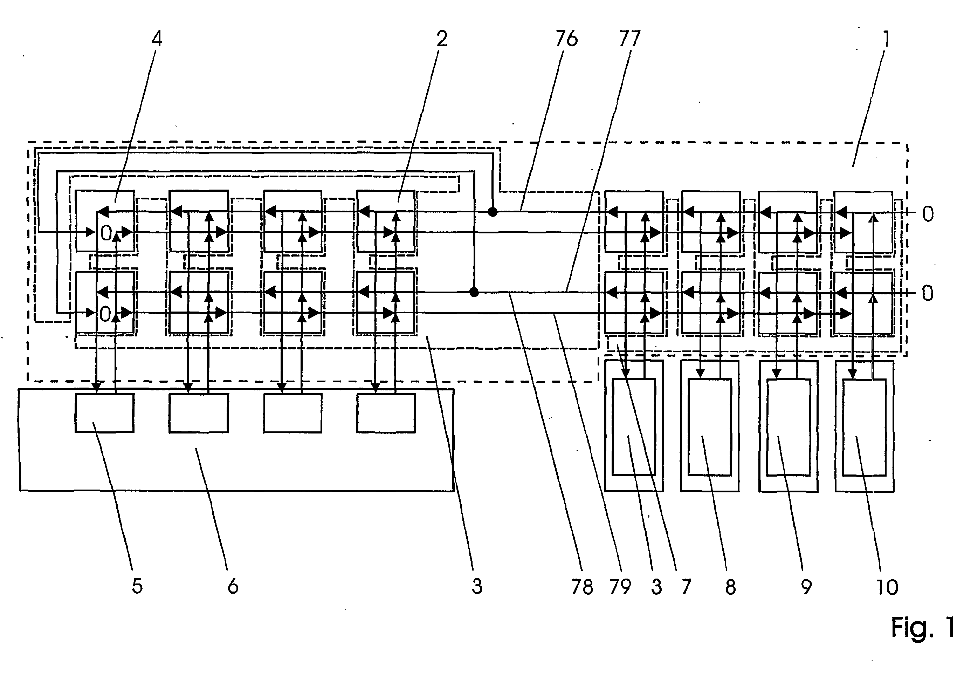

Wie in Fig. 1 ersichtlich, besteht der Bus 1 aus bidirektionalen Verbindungseinheiten 2 und Bussegmenten 3. Die Verbindungseinheiten sind zweistreifig gestaltet und führen im ersten Streifen die Datenwege ICUBUSOR 79 und ICUBUSOL 78 und im zweiten Streifen die Datenwege ICUBUS1R 77 und ICUBUS1L 76. An diesen Bus 1 sind die IOU-Funktionseinheit 10, AGU-Funktionseinheit 9, PCU-Funktionseinheit 8, GPU-Funktionseinheit 7, RFU-Funktionseinheit 6, die wiederum aus mehreren DPU-Funktionseinheiten 5 besteht, angeordnet.

Die Busenden sind mit Abschlusseinheiten 4 versehen, die bei Ausfall externer Busansteuersignale intern den Bus mit einem mit "0" gekennzeichneten Default-Zustand realisieren. laufzeitverkürzend werden die Datenwege ICUBUS1L 76 und ICUBUS0L 78 über Bussegmente 3 abgezweigt und mittels der Abschlusseinheiten 4 an die am Ende des Bus 1 angeordneten Verbindungseinheiten 2 zugeführt.

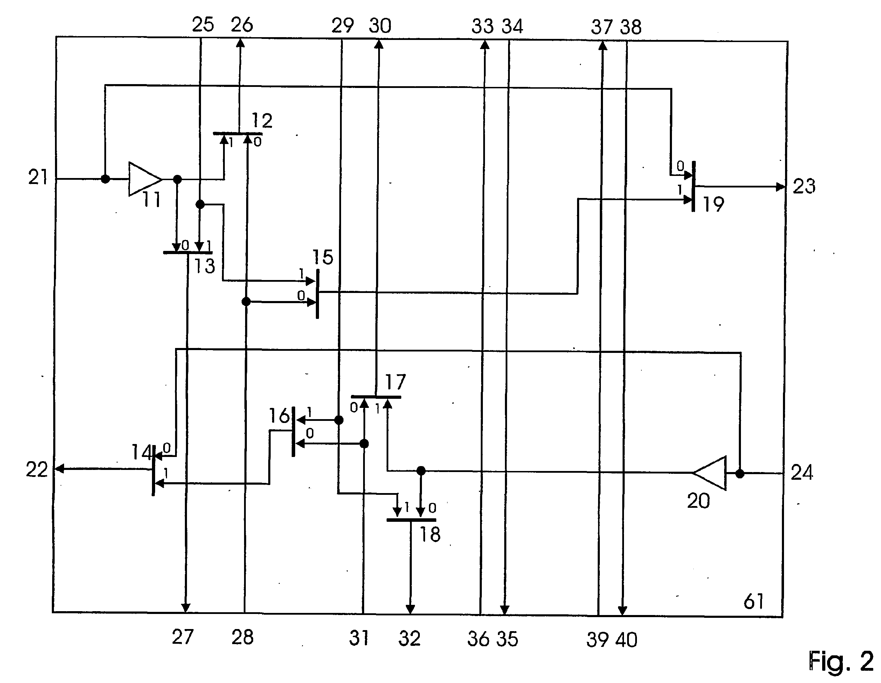

In Fig. 2 wird ersichtlich, wie durch die Multiplexer-Ausführung der dargestellten Verbindungseinheit die Verknüpfung des bidirektionalen ICU-rechts/links-Datenwegs mit einem kreuzenden Streifen eines ebenfalls bidirektionalen Datenweges zum Anschluss zweier Funktionseinheiten, hier als Beispiel der RFU-Funktionseinheit 6 und einer in Fig. 1 nicht erwähnten MEM-Funktionseinheit, vorgenommen wird. Hierbei wird der ICU-rechts-Datenweg über die ICU_In_Right-Signalleitung 21, und bei entsprechender "Durchschalten"-Ansteuerung direkt über das erste Ausgangstor 19, zur ICU_Out_Right-Signalleitung 23 geführt. Der ICU-links-Datenweg führt über die ICU_In_Left-Signalleitung 24, und bei entsprechender "Durchschalten"-Ansteuerung direkt über das vierte Ausgangstor 14, zur ICU_Out_Left-Signalleitung 22.

Weiterhin wird der ICU-rechts-Datenweg über den Eingangssignal-verstärker 11 und bei entsprechender Ansteuerung bei "Umschalten" einerseits über das zweite Ausgangstor 12 zur MEM_Out_Slc1-Right-Sgnalleitung 26 oder anderseits über das dritte Ausgangstor 13 zur RFU_Out_Slc1_Right-Signalleitung 27 geführt. Der ICU-links-Datenweg wird hingegen über den Eingangssignalverstärker 20 und bei entsprechender Ansteuerung bei "Umschalten" einerseits über das fünfte Ausgangstor 17 zur MEM_Out_Slc1_Left-Sgnalleitung 30 oder anderseits über das sechste Ausgangstor 18 zur RFU_Out_Slc1_Right-Signal-leitung 32 geführt.

Der MEM-rechts-Datenweg führt über die MEM_In_Slc1_Right-Signalleitung 25, einerseits bei entsprechender "Durchschalten" Ansteuerung direkt über das dritte Ausgangstor 13, zur RFU_Out_Slc1_Right-Signalleitung 27 oder anderseits bei entsprechender "Umschalten"-Ansteuerung über das erste Verknüpfungsgatter 15 und das erste Ausgangstor 19 an die ICU-Out_Right-Signalleitung 23.

Außerdem,ist für den MEM-rechts-Datenweg im Slice0 zu nennen, dass dieser Datenweg über die MEM_In_Slc0-Right-Signalleitung 34 direkt zur RFU_Out_slc0_Right-Signalleitung führt 35.

Der MEM-links-Datenweg führt über die MEM_In_Slc1_Left-Signalleitung 29 einerseits bei entsprechender "Durchschalten"-Ansteuerung direkt über das sechste Ausgangstor 18 zur RFU_Out_Slc1_Left-Signalleitung 32, anderseits bei entsprechender "Umschalten"-Ansteuerung über das zweite Verknüpfungsgatter 16 und das zweite Ausgangstor 14 an die ICU-Out_Left-Signalleitung 22.

Außerdem ist für den MEM-links-Datenweg im Slice0 zu nennen, dass dieser Datenweg über die MEM_In_Slc0-Left-Signalleitung 38 direkt zur RFU_Out_slc0_Left-Signalleitung 40 führt.

Der RFU-rechts-Datenweg im Slicel führt über die RFU_In_Slc1_Right-Signalleitung 28, einerseits bei entsprechender "Durchschalten" -Ansteuerung direkt über das zweite Ausgangstor 12 zur MEM_Out_Slc1_Right-Signalleitung 26 oder anderseits bei entsprechender "Umschalten"-Ansteuerung über das erste Verknüpfungsgatter 15 und das erste Ausgangstor 19 an die ICU_Out_Right-Signalleitung 23.

Weiterhin ist für den RFU-rechts-Datenweg im Slice0 zu nennen, dass dieser Datenweg über die RFU_In_Slc0-Right-Signalleitung 36 direkt zur MEM_Out_slc0_Right-Signalleitung 33 führt.

Der RFU-links-Datenweg in Slice1 führt über die RFU_In_Slc1_Left-Signalleitung 31 einerseits bei entsprechender "Durchschalten"-Ansteuerung direkt über das fünfte Ausgangstor 17 zur MEM_Out_Slc1_Left-Signalleitung 30, anderseits bei entsprechender "Umschalten"-Ansteuerung über das zweite Verknüpfungsgatter 16 und das zweite Ausgangstor 14 an die ICU-Out_Left-Signalleitung 22.

Außerdem ist für den RFU-links-Datenweg im Slice0 zu nennen, dass dieser Datenweg über die RFU_In_Slc0_Left-Signalleitung 39 direkt zur MEM_Out_slc0_Left-Signalleitung 37 führt.

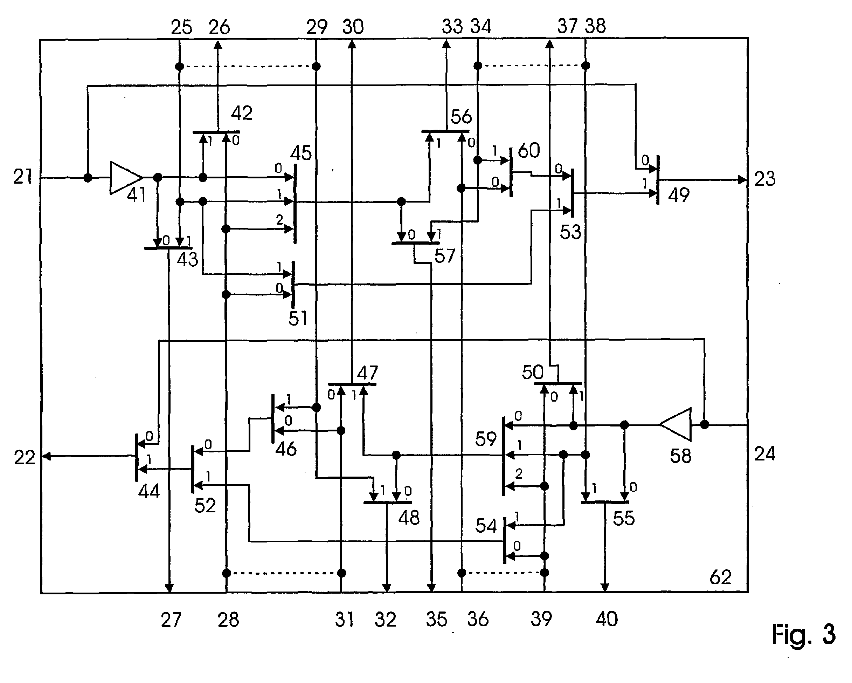

In Fig. 3 wird ersichtlich, wie durch die Multiplexer-Ausführung der dargestellten Verbindungseinheit die Verknüp-fung des bidirektionalen ICU-rechts/links-Datenwegs mit zwei kreuzenden Streifen zweier ebenfalls bidirektionaler Datenwege zum Anschluss zweier Funktionseinheiten, hier als Beispiel der RFU-Funktionseinheit 6 und einer MEM-Funktions-einheit, die in Fig. 1 nicht erwähnt ist, vorgenommen wird.

Hierbei wird der ICU-rechts-Datenweg über die ICU_In_Right-Signalleitung 21, und bei entsprechender "Durchschalten"-Ansteuerung direkt über das siebente Ausgangstor 49, zur ICU_Out_Right-Signalleitung 23 geführt. Der ICU-links-Daten-weg führt über die ICU_In_Left-Signalleirung 24, und bei entsprechender "Durchschalten"-Ansteuerung direkt über das zehnte Ausgangstor 44, zur ICU_Out_Left-Signalleitung 22.

Weiterhin wird der ICU-rechts-Datenweg für Slicel über den dritten Eingangssignalverstärker 41 verstärkt und bei entsprechender Ansteuerung bei "Umschalten" einerseits über das achte Ausgangstor 42 zur MEM_Out_Slc1_Right-Sgnalleitung 26 oder anderseits über das neunte Ausgangstor 43 zur RFU_Out_Slc1_Right-Signalleitung 27 geführt. Ebenfalls wird der ICU-rechts-Datenweg für Slice0 über den dritten EingangssignalVerstärker 41 verstärkt und bei entsprechender Ansteuerung bei "Umschalten" über das dritte Verknüpfungsgatter 45 und einerseits Über das fünfzehnte Ausgangstor 56 zur MEM_Out_Slc0_Right-Sgnalleitung 33 oder anderseits über das sechzehnte Ausgangstor 57 zur RFU_Out_slc0_Right-Signalleitung 35 geführt.

Der ICU-links-Datenweg für Slicel wird hingegen über den vierten Eingangssignalverstärker 58 verstärkt und bei entsprechender Ansteuerung bei "Umschalten" einerseits über das neunte Verknüpfungsgatter 59 und das elfte Ausgangstor 47 zur MEM_Out_Slc1-Left-Sgnalleitung 30 oder anderseits über das neunte Verknüpfungsgatter 59 und zwölfte Ausgangstor 48 zur RFU_Out_Slc1_Right-Signalleitung 32 geführt.

Der ICU-links-Datenweg für Slice0 wird ebenfalls über den vierten Eingangssignalverstärker 58 verstärkt, aber bei entsprechender Ansteuerung bei "Umschalten" einerseits über das vierzehnte Ausgangstor 50 zur MEM_Out_Slc0_Left-Signalleitung 37 oder anderseits über das dreizehnte Ausgangstor 55 zur RFU_Out_Slc0_Left-Signal-leitung 40 geführt.

Der MRM-rechts-Datenweg für Slicel führt über die MEM_In_Slc1_Right-Signalleitung 25, einerseits bei entsprechender "Durchschalten"-Ansteuerung direkt über das neunte

Ausgangstor 43 zur RFU_Out_Slc1_Right-Signalleitung 27 oder anderseits bei entsprechender "Umschalten"-Ansteuerung über das vierte Verknüpfungsgatter 51 und das fünfte Verknüpfungsgatter 53 und das siebente Ausgangstor 49 an die ICU_Out_Right-Signalleitung 23.

Ebenfalls führt der MEM-rechts-Datenweg für Slicel über die MEM_In_Slc1_Right-Signalleitung 25 aber nachfolgend über das dritte Verknüpfungsgatter 45 entsprechend der "Umschalten"-Ansteuerung einerseits über das fünfzehnte Ausgangstor 56 an die MEM_Out_Slc0_Right-Signalleitung 33 oder anderseits über das sechszehnte Ausgangstor 57 an die RFU_Out_Slc0_Right-Signalleitung 35.

Der MEM-rechts-Datenweg für Slice0 führt über die MEM_In_Slc0_Right-Signalleitung 34, einerseits bei entsprechender "Durchschalten"-Ansteuerung direkt über das sechzehnte Ausgangstor 57 zur RFU_Out Slc0_Right-Signalleitung 35 oder anderseits bei entsprechender "Umschalten"-Ansteuerung über das zehnte Verknüpfungsgatter 60, das fünfte Verknüpfungsgatter 53 und das siebte Ausgangstor 49 an die ICU_Out_Right-Signalleitung 23.

Der MEM-links-Datenweg für Slicel führt über die MEM_In_Slc1_Left-Signalleitung 29 einerseits bei entsprechender "Durchschalten"-Ansteuerung direkt über das zwölfte Ausgangstor 48 zur RFU_Out_Slc1_Left-Signalleitung 32, anderseits bei entsprechender "Umschalten"-Ansteuerung über das sechste Verknüpfungsgatter 46 und das siebente Verknüpfungsgatter 52 sowie das zehnte Ausgangstor 44 an die ICU-Out_Left-Signalleitung 22.

Außerdem führt der MEM-links-Datenweg im Slice0 über die MEM_In_Slc0-Left-Signalleitung 38 einerseits bei entsprechender "Durchschalten"-Ansteuerung-direkt über das dreizehnte

Ausgangstor 55 zur RFU_Out_slc0_Left-Signal-leitung 40 oder anderseits bei entsprechender "Umschalten Ansteuerung über das achte Verknüpfungsgatter 54 und das siebente Verknüpfungsgatter 52 sowie das zehnte Ausgangstor 44 an die ICU_Out_Left-Signalleitung. Weiterhin führt der MEM-links-Datenweg im Slice0 über die MEM_In_Slc0-Left-Signalleitung 38 bei entsprechender "Umschalten"-Ansteu-erung über das neunte Verknüpfungsgatter 59 und einerseits über das elfte Ausgangstor 47 zur MEM_Out_Slc1_Left-Signalleitung 30 oder anderseits über das zwölfte Ausgangstor 48 an die RFU_Out_Slc1_Left-Signalleitung 32.

Der RFU-rechts-Datenweg im Slice1 führt über die RFU_In_Slc1_Right-Signalleitung 28, einerseits bei entsprechender "Durchschalten"-Ansteuerung direkt über das achte Ausgangstor 12 zur MEM_Out_Slc1_Right-Signalleitung 26 oder anderseits bei entsprechender "Umschalten"-Ansteuerung über das vierte Verknüpfungsgatter 51 und das fünfte Verknüpfungsgatter 53 sowie das siebente Ausgangstor 49 an die ICU_Out_Right-Signalleitung 23.

Der RFU-rechts-Datenweg im Slice1 führt weiterhin von der RFU_In_Slc1_Right-Signalleitung 28, bei entsprechender "Umschalten"-Ansteuerung über das dritte Verknüpfungsgatter und einerseits das fünfzehnte Ausgangstor 56 zur MEM_Out_Slc0_Right-Signalleitung 33 oder anderseits über das Sechzehnte Ausgangstor 57 an die RFU-Out_Slc0-Right- Signalleitung 35.

Weiterhin führt der RFU-rechts-Datenweg im Slice0 von der RFU_In_Slc0_Right-Signalleitung 36 einerseits bei entsprechender "Durchschalten"-Ansteuerung direkt über das fünf-zehnte Ausgangstor 56 zur MEM_Out_slc0_Right-Signalleitung 33 oder anderseits bei entsprechender "Umschalten"- Ansteu-erung über das zehnte Verknüpfungsgatter 60 und das fünftes

Verknüpfungsgatter 53 sowie das siebente Ausgangstor 49 an die ICU_Out_Right-Signalleitung 23

Der RFU-links-Datenweg in Slicel führt über die RFU_In_Slc1_Left-Signalleitung 31 einerseits bei entsprechender "Durchschalten"-Ansteuerung direkt über das elfte Ausgangstor 47 zur MEM_Out_Slc1_Left-Signalleitung 30, anderseits bei entsprechender "Umschalten"-Ansteuerung über das sechste Verknüpfungsgatter 46 und siebente Verknüpfungsgatter 52 und das zehnte Ausgangstor 44 an die ICU_Out_Left-Signalleitung 22.

Der RFU-links-Datenweg im Slice0 führt von der RFU_In_Slc0_Left-Signalleitung 39 einerseits bei entsprechender "Durchschalten"-Ansteuerung direkt über das vierzehnte Ausgangstor 50 zur MEM_Out_slc0_Left-Signal-leitung 37 oder anderseits bei entsprechender "Umschalten"- Ansteuerung über das achte Verknüfungsgatter 54 und das siebente Verknüpfungsgatter 52 sowie das zehnte Ausgangstor 44 an die ICU_Out_Left-Signalleitung 22. Außerdem führt der RFU-links-Datenweg im Slice0 von der RFU_in_Slc0_Left-Signalleitung 39 bei entsprechender "Umschalten"-Ansteuerung über das neunte Verknüpfungsgatter 59 und einerseits über das elfte Ausgangstor 47 zur MEM_Out_Slc1_Left-Signalleitung 30 oder anderseits über das zwölfte Ausgangstor 48 an die RFU_Out_Slc1-Left-Signalleitung 32.

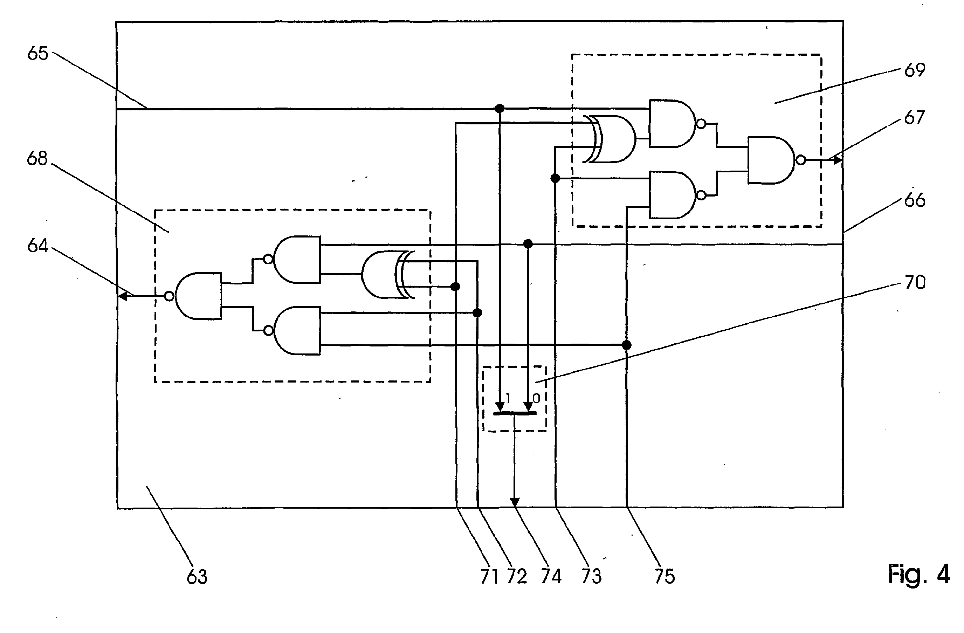

In dem in Fig. 4 ersichtlichen Übersichtsschaltbild zur OR-Funktionserweiterung einer Multiplexer Verbindungseinheit führt ein ICU-rechts-Datenweg von der ICU_right_in-Signal-leitung 65 auf eine icuwmux-Teileinheit 70 und auf eine icurmux-or/multiplex-Teileinheit 69 deren Ausgang an die ICU_right_out-Signalleitung 67 angeschlossen ist. Ein ICU-links-Datenweg führt von der ICU_left_in-Signalleitung 66 auf eine icuwmux-Teileinheit 70 und auf eine iculmux-or/multiplex-Teileinheit 68, deren Ausgang an die TCU_left_out-Signalleitung 64 angeschlossen ist. Die RFU_in_Signalleitung 75 ist an die jeweiligen zweiten Eingänge von icurmux-or/multiplex-Teileinheit 69 und iculmux-or/multiplex-Teileinheit 68 zur erforderlichen Signalverarbeitung angeschlossen. Außerdem ist an die curmux-or/multiplex-Teileinheit 69 und iculmux-or/multiplex-Teileinheit 68 eine ICUORMUX_ctr1-Signalleitung 71 über deren logische Belegung die Funktionsauswahl Multiplexfunktion oder OR-Funktionserweiterung für die beiden Teileinheiten vorgenommen werden kann. Über die, an die iculmux-or/multiplex-Teileinheit 68 angeschlossenen ICULMUX_ctr1-Signalleitung 72 und über die an icurmux-or/multiplex-Teileinheit 69 angeschlossene ICURMUX_ctrl-Signalleitung 73 werden die Torsteuerungen der Teileinheiten ausgeführt.

### Bezugzeichenliste

- 1: Bus
- 2: verbindungseinheit
- 3: Bussegment
- 4: Abschlußeinheit
- 5: DPU-Funktionseinheit
- 6: RFU-Funktionseinheit
- 7: GPU-Funktionseinheit
- 8: PCU-Funktionseinheit
- 9: AGU-Funktionseinheit
- 10: IOU-Funktionseinheit
- 11: erster Eingangssiganlverstärker
- 12: zweites Ausgangstor
- 13: drittes Ausgangstor
- 14: viertes Ausgangstor
- 15: erstes Verknüpfungsgatter
- 16: zweites Verknüpfungsgatter
- 17: fünftes Ausgangstor
- 18: sechstes Ausgangstor
- 19: erstes Ausgangstor
- 20: zweiter Eingangssignalverstärker
- 21: ICU_In_Right-Signalleitung
- 22: ICU_Out_Left-Signalleitung
- 23: ICU_Out_Right-Signalleitung
- 24: ICU_In_Left-Signalleitung
- 25: MEM_In_Slc1_Right-Signalleitung
- 26: MEM_Out_Slc1_Right-Signalleitung
- 27: RFU_Out_Slc1_Right-Signalleitung
- 28: RFU-In_Slc1_Right-Signalleitung
- 29: MEM_In_Slc1_Left-Signalleitung
- 30: MEM_Out_Slc1_Left-Signalleitung
- 31: RFU_In_Slc1_Left-Signalleitung
- 32: RFU_Out_Slc1_Left_Signalleitung
- 33: MEM_Out_Slc0_Right-Signalleitung
- 34: MEM_In_Slc0_Right-Signalleitung
- 35: RFU-Out_Slc0_Right_Signalleitung
- 36: RFU_In_Slc0_Right-Signalleitung
- 37: MEM_Out_Slc0-Left-Signalleitung
- 38: MEM_In_Slc0-Left-Signalleitung
- 39: RFU_In_Slc0_Left-Signalleitung
- 40: RFU_Out_Slco_Left-Signalleitung
- 41: dritter Eingangssignalverstärker
- 42: achtes Ausgangstor
- 43: neuntes Ausgangstor
- 44: zehntes Ausgangstor
- 45: drittes Verknüpfungsgatter
- 46: sechstes Verknüpfungsgatter
- 47: elftes Ausgangstor
- 48: zwölftes Ausgangstor
- 49: siebentes Ausganstor
- 50: vierzehntes Ausgangstor
- 51: viertes Verknüpfungsgatter
- 52: siebentes Verknüpfungsgatter
- 53: fünftes Verknüpfungsgatter
- 54: achtes Verknüpfungsgatter
- 55: dreizehntes Ausgangstor
- 56: fünfzehntes Ausgangstor
- 57: sechszehntes Ausgangstor
- 58: vierter Eingangssignalverstärker
- 59: neuntes Verknüpfungsgatter
- 60: zehntes Verknüpfungsgatter
- 61: 2-Directions-Multiplexer
- 62: Dual-Slice-2-Directions-Multiplexer
- 63: Dual-Slice-2-Directions-OR/Multiplex-Einheit
- 64: ICU_left_out-Signalleitung
- 65: ICU_right_in-Signalleitung
- 66: ICU_left_in-Signalleitung
- 67: ICU_right_out-Signalleitung
- 68: iculmux-or/multiplex-left-Teileinheit
- 69: icurmux-or/multiplex-right-Teileinheit
- 70: icuwmux-or/multiplex-wert-Teileinheit
- 71: ICUOFMUX_ctrl-Signalleitung
- 72: ICULMUX_ctrl-Signalleitung
- 73: ICURMUX_ctrl_Signalleitung
- 74: ICU_out-Signalleitung
- 75: RFU_in_Signalleitung
- 76: ICUBUSLL
- 77: ICUBUS1R
- 78: ICUBUS0L
- 79: ICUBUSOR

## Patentansprüche

1. Prozessorbusanordnung eines chipinternen parallelen Prozessorsystems mit einer ersten und einer zweiten Daten-Prozess-Einheit, die jeweils mit einem als Bus vereinbarten Leitungssystem verbunden sind **dadurch gekennzeichnet, dass** der Bus (1) eine Verbindungseinheit (2) und Bussegmente (3) aufweist, wobei die Bussegmente (3) über die Verbindungseinheit (2) zu dem Bus (1) auftrennbar verbunden ist,
dass in der Verbindungseinheit (2) Mehrfach-Wege, die die Datenübertragung in der Verbindungseinheit (2) unidirektional oder bidirektional ausführend, angeordnet sind,
dass mit einer ersten Verbindungseinheit (2) eine zweite und eine dritte verbindungseinheit (2) als wiederholstruktur verkettet angeordnet ist,
dass die Verbindungseinheiten (2) der Wiederholstruktur sternförmig oder/und ringförmig verkettet angeordnet sind, dass die verbindungseinheiten (2) bezüglich benachbart angeordneter Verbindungseinheiten (2) überbrückend schaltbar angeordnet sind.

2. Anordnung nach Anspruch 1 **dadurch gekennzeichnet, dass** an den jeweiligen Enden der verketteten Wiederholstruktur von Verbindungseinheiten (2) eine Abschlusseinheit (4) angeordnet ist.

3. Anordnung nach Anspruch 2 **dadurch gekennzeichnet, dass** die Abschlusseinheit (4) ohne weitere Beschaltung abschließend an die Wiederholstruktur geschaltet wird oder dass sie zusätzlich an Verbindungseinheiten (2) direkt angeschlossen wird.

4. Anordnung nach Ansprüchen 1 **dadurch gekennzeichnet, dass** die verbindungseinheit (2) aus einem Multiplexer besteht.

5. Anordnung nach Anspruch 4 **dadurch gekennzeichnet, dass** die Multiplexer-Torfunktion auf die logischen Operationen OR und XOR umschaltbar erweitert wird.

6. Anordnung nach Anspruch 4 **dadurch gekennzeichnet, dass** der Multiplexer durch einen 2-Directions-Multiplexer (61) ausgeführt ist, wobei eine ICU_IN_RIGHT-Signalleitung (21) mit einem ersten Eingang eines ersten Eingangssignalverstärkers (11) und gleichzeitig mit einem ersten Eingang eines ersten Ausgangstores (19) und dessen Ausgang an die ICU_Out_Right-Signalleitung (23) angeschlossen ist,
dass der Ausgang des ersten Eingangssignalverstärkers (11) mit einem ersten Eingang eines zweiten Ausgangstores (12) und gleichzeitig mit einem ersten Eingang eines dritten Ausgangstores (13) verbunden ist, dessen zweiter Eingang ist an der MEM_In_SL1_Right-Signalleitung (25) und gleichzeitig mit einem ersten Eingang eines ersten verknüpfungsgatters (15) verbunden und dessen Ausgang ist mit dem zweiten Eingang des ersten Ausgangstores (19) verbunden,
dass der Ausgang des zweiten Ausgangstores (12) an einer Signalleitung MEM_Out_SLC1_Right (26) und dessen Eingang wiederum an eine Signalleitung RFU_In_Slc1_Right (28) und gleichzeitig an den zweiten des ersten Verknüpfungsgatters (15) angeschlossen ist, dass der Ausgang des dritten
Ausgangstores (13) an eine RFU_Out_Slc1_Right_Signalleitung (27) geschalten ist, dass eine ICU_IN_Left-Signalleitung (24) mit einem Eingang eines zweiten Eingangssignalverstärker (20) und gleichzeitig mit einem ersten Eingang eines vierten Ausgangstores (14) und dessen Ausgang an eine ICU_Out_Left-Signalleitung (22) angeschlossen ist,
dass der Ausgang des zweiten Eingangssignalverstärkers (20) mit einem ersten Eingang eines fünften Ausgangstores (17) und gleichzeitig mit einem ersten Eingang eines sechsten Ausgangstores (18) verbunden ist, dessen zweiter Eingang ist an der MEM_SL1_Left-Signalleitung (29) und gleichzeitig mit einem ersten Eingang eines zweiten Verknüpfungsgatters (16) verbunden und dessen Ausgang ist mit dem zweiten Eingang des vierten Ausgangstores (14) verbunden,
dass der Ausgang des fünften Ausgangstores (17) an einer Signalleitung MEM_Out_SLC1-Left (30) und der zweite Eingang eines fünften Ausgangstores (17) an eine Signalleitung RFU_In_Slc1_-Left (31) und gleichzeitig an den zweiten Eingang des zweiten Verknüpfungsgatters (16) angeschlossen ist,
dass der Ausgang des sechsten Ausgangstores (18) an eine RFU_Out_Slc1_Left_Signalleitung (32) geschalten ist, dass eine Signalleitung RFU_In_Slc0_Right (36) mit einer Signalleitung MEM_Out_Slc0_Right (33),
dass eine Signalleitung RFU_Out_Slc0_Right (35) mit einer Signalleitung MEM_In_Slc0_Right (34),
dass eine Signalleitung RFU_In_Slc0_Left (39) mit einer Signalleitung MEM_Out_SLc0_Left (37) und
dass eine Signalleitung RFU_Out_Slc0_Left (40) mit einer Signalleitung MEM_Out_Slc0_Left (38) in Verbindung stehen.

7. Anordnung nach Anspruch 4 **dadurch gekennzeichnet, dass** der Multiplexer durch einen Dual-Slice-2-Directions-Multiplexer (62) ausgeführt ist, wobei eine ICU_IN_RIGHT-Signalleitung (21) mit einem ersten
Eingang eines dritten Eingangssignalverstärkers (41) und gleichzeitig mit einem ersten Eingang eines siebente
Ausgangstores (49) und dessen Ausgang an die ICU_Out_Right-Signalleitung (23) angeschlossen ist,
dass der Ausgang des dritten Eingangssignalverstärkers (41) mit einem ersten Eingang eines achten Ausgangstores (42) und gleichzeitig mit einem ersten Eingang eines neunten Ausgangstores (43) sowie mit einem ersten Eingang eines dritten Verknüpfungsgatters (45) verbunden ist,
dass der zweite Eingang des neunten Ausgangtores (43) mit der MEN_In_SL1_Right-Signalleitung (25) und gleichzeitig mit dem zweiten Eingang des dritten Verknüpfungsgatters (45) sowie einem ersten Eingang eines vierten verknüpfungsgatter (51) verbunden ist, und dessen Ausgang mit einem ersten Eingang eines fünften Verknüpfungsgatters (53) geschaltet ist,
dass der Ausgang des achten Ausgangstores (42) an einer Signalleitung MEM_Out_SLC1-Right (26) und dessen zweiter Eingang wiederum an eine Signalleitung RFU_In_Slc1-Right (28) und gleichzeitig an den dritten Eingang des dritten Verknüpfungsgatters (45) und außerdem an den zweiten Eingang des vierten Verknüpfungsgatter (51) angeschlossen ist,
dass der Ausgang des neunten Ausgangstores (43) an eine RFU_Out_Slc1-_Right-Signalleitung (27) geschalten ist,
dass der Ausgang des dritten Verknüpfungsgatter (45) mit einem ersten Eingang eines fünfzehnten Ausgangstores (56) und gleichzeitig mit einem ersten Eingang eines sechzehnten Ausgangstores (57) verbunden ist, dessen Ausgang wiederum mit der RFU_Out_Slc0_Right-Signalleitung (35) verbunden ist, dass die RFU_In_Slc0-Right-Signaleitung (36) mit dem zweiten Eingang des fünfzehnten Ausgangstores (56) und außerdem mit einem ersten Eingang eines zehnten Verknüpfungsgatters (60) in Verbindung steht wobei dessen Ausgang an den zweiten Eingang des fünften verknüpfungsgatters (53) geschalten ist, dass der zweite Eingang des zehnten Verknüpfungsgatters
(60) an die MEM_In_Slc0_Right-Siganalleitung (34) und außerdem an den zweiten Eingang des sechzehnten Ausgangstores (57) angeschlossen ist, dass der Ausgang des fünfzehnten Ausgangstores (56) mit der MEM_Out_S1c0-Right-Signal-leitung (33) verbunden ist, dass der Ausgang des fünften Verknüpfungsgatters (53) an den zweiten Eingang des siebenten Ausgangstores (49) geschalten ist, dass eine ICU_IN_Left-Signalleitung (24) mit einem ersten Eingang eines vierten Eingangssignalverstärkers (58) und gleichzeitig mit einem ersten Eingang eines zehnten Ausgangstores (44) und dessen Ausgang an die ICU_Out_Left-Signalleitung (22) angeschlossen ist,
dass der Ausgang des vierten Eingangssignalverstärkers (58) mit einem ersten Eingang eines dreizehnten Ausgangstores (55) und gleichzeitig mit einem ersten Eingang eines vierzehnten Ausgangstores (50) sowie mit einem ersten Eingang eines neunten Verknüpfungsgatters (59) verbunden ist,
dass der zweite Eingang des vierzehnten Ausgangtores (50) mit der RFU_In_SLc0_Left-Signalleitung (39) und gleichzeitig mit dem zweiten Eingang des neunten Verknüpfungsgatters (59) sowie einem ersten Eingang eines achten Verknüpfungsgatters (54) verbunden ist, und dessen Ausgang mit einem ersten Eingang eines siebenten Verknüpfungsgatters (52) geschaltet ist,
dass der Ausgang des dreizehnten Ausgangstores (55) an einer Signalleitung RFU_Out_SLCO-Left (40) und dessen zweiter Eingang wiederum an eine Signalleitung MEM_In_Slc0-Left (38) und gleichzeitig an den dritten Eingang des neunten Verknüpfungsgatters (59) und außerdem an den zweiten Eingang des achten Verknüpfungsgatter (54) angeschlossen ist, dass der Ausgang des vierzehnten Ausgangstores (50) an eine MEM_Out_Slc0-_Left-Signalleitung (37) geschalten ist,
dass der Ausgang des neunten Verknüpfungsgatters (59) mit einem ersten Eingang eines elften Ausgangstores (47) und
gleichzeitig mit einem ersten Eingang eines zwölften Ausgangstores (48) verbunden ist, dessen Ausgang wiederum mit der RFU_Out_Slc1_Left-Signalleitung (32) verbunden ist, dass die MEML_In_Slc1-Left-Signaleitung (29) mit dem zweite
Eingang des zwölften Ausgangstores (48) und außerdem mit einem ersten Eingang eines sechsten Verknüpfungsgatters (46) in verbindung steht wobei dessen Ausgang an den zweiten Eingang des siebenten Verknüpfungsgatters (52) geschalten ist,
dass der zweite Eingang des sechsten Verknüpfungsgatters (46) an die RFU_In_Slc1_Left-Siganalleitung (31) und außerdem an den zweiten Eingang des elften Ausgangstores (47) angeschlossen ist, dessen Ausgang mit der MEM_Out_Slc1-Left-Signalleitung (30) verbunden ist,
dass der Ausgang des siebenten Verknüpfungsgatters (52) an den zweiten Eingang des siebenten Ausgangstores (49) geschalten ist.

## Claims

1. Processor bus arrangement of a chip-internal parallel processor system having a first data process unit and a second data process unit which are each connected to a line system which has been declared to be a bus, **characterized in that** the bus (1) has a connecting unit (2) and bus segments (3), the bus segments (3) being connected to form the bus (1) in a separable manner by means of the connecting unit (2),
**in that** multiple paths which transmit the data in a unidirectional or bidirectional manner in the connecting unit (2) are arranged in the connecting unit (2),
**in that** a second connecting unit and a third connecting unit (2) are arranged in concatenated fashion as a repetition structure with a first connecting unit (2),
**in that** the connecting units (2) of the repetition structure are arranged in concatenated fashion in the form of a star or/and ring, and **in that** the connecting units (2) are arranged such that they can be connected to bridge adjacently arranged connecting units (2).

2. Arrangement according to Claim 1, **characterized in that** a terminating unit (4) is arranged at the respective ends of the concatenated repetition structure of connecting units (2).

3. Arrangement according to Claim 2, **characterized in that** the terminating unit (4) is finally connected to the repetition structure without further wiring, or **in that** it is additionally directly connected to connecting units (2).

4. Arrangement according to Claim 1, **characterized in that** the connecting unit (2) comprises a multiplexer.

5. Arrangement according to Claim 4, **characterized in that** the multiplexer port function is extended such that it can be changed over to the logic operations OR and XOR.

6. Arrangement according to Claim 4, **characterized in that** the multiplexer is in the form of a 2-direction multiplexer (61), an ICU_IN_RIGHT signal line (21) being connected to a first input of a first input signal amplifier (11) and simultaneously to a first input of a first output port (19), the output of the latter being connected to the ICU_Out_Right signal line (23),
**in that** the output of the first input signal amplifier (11) is connected to a first input of a second output port (12) and simultaneously to a first input of a third output port (13), the second input of which is connected to the MEM_In_SLc1_Right signal line (25) and simultaneously to a first input of a first logic combination gate (15), the output of which is connected to the second input of the first output port (19),
**in that** the output of the second output port (12) is connected to a signal line MEM_Out_SLC1_Right (26) and the input of said second output port is in turn connected to a signal line RFU_In_Slc1_Right (28) and simultaneously to the second input of the first logic combination gate (15), **in that** the output of the third output port (13) is connected to an RFU_Out_Slc1_Right signal line (27), **in that** an ICU_IN_Left signal line (24) is connected to an input of a second input signal amplifier (20) and simultaneously to a first input of a fourth output port (14), the output of which is connected to an ICU_Out_Left signal line (22),
**in that** the output of the second input signal amplifier (20) is connected to a first input of a fifth output port (17) and simultaneously to a first input of a sixth output port (18), the second input of which is connected to the MEM_In_SLc1_Left signal line (29) and simultaneously to a first input of a second logic combination gate (16), the output of which is connected to the second input of the fourth output port (14),
**in that** the output of the fifth output port (17) is connected to a signal line MEM_Out_SLC1_Left (30) and the second input of a fifth output port (17) is connected to a signal line RFU_In_Slc1_Left (31) and simultaneously to the second input of the second logic combination gate (16),
**in that** the output of the sixth output port (18) is connected to an RFU_Out_Slc1_Left signal line (32), **in that** a signal line RFU_In_Slc0_Right (36) is connected to a signal line MEM_Out_Slc0_Right (33),
**in that** a signal line RFU_Out_Slc0_Right (35) is connected to a signal line MEM_In_Slc0_Right (34), **in that** a signal line RFU_In_Slc0_Left (39) is connected to a signal line MEM_Out_SLc0_Left (37), and
**in that** a signal line RFU_Out_Slc0_Left (40) is connected to a signal line MEM_In_Slc0_Left (38).

7. Arrangement according to Claim 4, **characterized in that** the multiplexer is in the form of a dual-slice 2-direction multiplexer (62), an ICU_IN_RIGHT signal line (21) being connected to a first input of a third input signal amplifier (41) and simultaneously to a first input of a seventh output port (49), the output of which is connected to the ICU_Out_Right signal line (23),
**in that** the output of the third input signal amplifier (41) is connected to a first input of an eighth output port (42) and simultaneously to a first input of a ninth output port (43) as well as to a first input of a third logic combination gate (45),
**in that** the second input of the ninth output port (43) is connected to the MEM_In_SLc1_Right signal line (25) and simultaneously to the second input of the third logic combination gate (45) as well as to a first input of a fourth logic combination gate (51), the output of which is connected to a first input of a fifth logic combination gate (53),
**in that** the output of the eighth output port (42) is connected to a signal line MEM_Out_SLC1_Right (26) and the second input of said eighth output port is in turn connected to a signal line RFU_In_Slc1_Right (28) and simultaneously to the third input of the third logic combination gate (45) and also to the second input of the fourth logic combination gate (51),
**in that** the output of the ninth output port (43) is connected to an RFU_Out_Slc1_Right signal line (27),
**in that** the output of the third logic combination gate (45) is connected to a first input of a fifteenth output port (56) and simultaneously to a first input of a sixteenth output port (57), the output of which is in turn connected to the RFU_Out_Slc0_Right signal line (35), **in that** the RFU_In_Slc0_Right signal line (36) is connected to the second input of the fifteenth output port (56) and also to a first input of a tenth logic combination gate (60), the output of the latter being connected to the second input of the fifth logic combination gate (53), **in that** the second input of the tenth logic combination gate (60) is connected to the MEM_In_Slc0_Right signal line (34) and also to the second input of the sixteenth output port (57),
**in that** the output of the fifteenth output port (56) is connected to the MEM_Out_Slc0_Right signal line (33),
**in that** the output of the fifth logic combination gate (53) is connected to the second input of the seventh output port (49), **in that** an ICU_IN_Left signal line (24) is connected to a first input of a fourth input signal amplifier (58) and simultaneously to a first input of a tenth output port (44), the output of which is connected to the ICU_Out_Left signal line (22),
**in that** the output of the fourth input signal amplifier (58) is connected to a first input of a thirteenth output port (55) and simultaneously to a first input of a fourteenth output port (50) as well as to a first input of a ninth logic combination gate (59),
**in that** the second input of the fourteenth output port (50) is connected to the RFU_In_SLc0_Left signal line (39) and simultaneously to the second input of the ninth logic combination gate (59) as well as to a first input of an eighth logic combination gate (54), the output of which is connected to a first input of a seventh logic combination gate (52),
**in that** the output of the thirteenth output port (55) is connected to a signal line RFU_Out_SLC0_Left (40) and the second input of said thirteenth output port is in turn connected to a signal line MEM_In_Slc0_Left (38) and simultaneously to the third input of the ninth logic combination gate (59) and also to the second input of the eighth logic combination gate (54), **in that** the output of the fourteenth output port (50) is connected to a MEM_Out_Slc0_Left signal line (37),
**in that** the output of the ninth logic combination gate (59) is connected to a first input of an eleventh output port (47) and simultaneously to a first input of a twelfth output port (48), the output of which is in turn connected to the RFU_Out_Slc1_Left signal line (32), **in that** the MEM_In_Slc1_Left signal line (29) is connected to the second input of the twelfth output port (48) and also to a first input of a sixth logic combination gate (46), the output of the latter being connected to the second input of the seventh logic combination gate (52),
**in that** the second input of the sixth logic combination gate (46) is connected to the RFU_In_Slc1_Left signal line (31) and also to the second input of the eleventh output port (47), the output of which is connected to the MEM_Out_Slc1_Left signal line (30), and
**in that** the output of the seventh logic combination gate (52) is connected to the second input of the seventh output port (49).

## Revendications

1. Agencement du bus de processeur d'un système parallèle de processeurs interne à une puce, avec une première et une deuxième unité de processus de données, qui sont respectivement reliées à un système de lignes regroupées sous forme de bus, **caractérisé**
**en ce que** le bus (1) comporte une unité de liaison (2) et des segments de bus (3), les segments de bus (3) étant reliés au bus (1) de manière séparable par l'intermédiaire de l'unité de liaison (2),
**en ce que** des chemins multiples sont agencés dans l'unité de liaison (2) pour assurer la transmission unidirectionnelle ou bidirectionnelle des données dans l'unité de liaison (2),
**en ce qu'**une deuxième et une troisième unité de liaison (2) sont chaînées avec une première unité de liaison (2) pour former une structure répétitive,
**en ce que** les unités de liaison (2) de la structure répétitive sont chaînées sous forme d'étoile et/ou d'anneau,
**en ce que** les unités de liaison (2) sont arrangées de manière commutable pour ponter les unités de liaison (2) avoisinantes.

2. Arrangement selon la revendication 1, **caractérisé en ce qu'**une unité de terminaison (4) est arrangée aux extrémités respectives de la structure répétitive chaînée d'unités de liaison (2).

3. Arrangement selon la revendication 2, **caractérisé en ce que** l'unité de terminaison (4) est ensuite branchée sans autres circuits à la structure répétitive ou **en ce qu'**elle est directement raccordée en addition à des unités de liaison (2).

4. Arrangement selon la revendication 1, **caractérisé en ce que** l'unité de liaison (2) consiste en un multiplexeur.

5. Arrangement selon la revendication 4, **caractérisé en ce que** la fonction de port-multiplexeur est étendue de manière commutable aux opérations logiques OR et XOR.

6. Arrangement selon la revendication 4, **caractérisé**
**en ce que** le multiplexeur est réalisé sous la forme d'un multiplexeur à 2 directions (61) dans lequel une ligne de signaux ICU_In_Right (21) est raccordée à une première entrée d'un premier amplificateur de signaux d'entrée (11) et simultanément à une première entrée d'un premier port de sortie (19) dont la sortie est raccordée à la ligne de signaux ICU_Out_Right (23),
**en ce que** la sortie du premier amplificateur de signaux d'entrée (11) est reliée à une première entrée d'un deuxième port de sortie (12) et simultanément à une première entrée d'un troisième port de sortie (13) dont la deuxième entrée est reliée à la ligne de signaux MEM_In_Slc1_Right (25) et simultanément à une première entrée d'une première porte logique (15) dont la sortie est reliée à la deuxième entrée du premier port de sortie (19),
**en ce que** la sortie du deuxième port de sortie (12) est raccordée à une ligne de signaux MEM_Out_Slc1_Right (26) et son entrée est raccordée d'autre part à une ligne de signaux RFU_In_Slc1_Right (28) et simultanément à la deuxième entrée de la première porte logique (15), en ce que la sortie du troisième port de sortie (13) est branchée à une ligne de signaux RFU_Out_Slc1_Right (27),
**en ce qu'**une ligne de signaux ICU_In_Left (24) est raccordée à une entrée d'un deuxième amplificateur de signaux d'entrée (20) et simultanément à une première entrée d'un quatrième port de sortie (14) dont la sortie est raccordée à une ligne de signaux ICU_Out_Left (22),
**en ce que** la sortie du deuxième amplificateur de signaux d'entrée (20) est reliée à une première entrée d'un cinquième port de sortie (17) et simultanément à une première entrée d'un sixième port de sortie (18) dont la deuxième entrée est reliée à la ligne de signaux MEM_In_Slc1_Left (29) et simultanément à une première entrée d'une deuxième porte logique (16) dont la sortie est reliée à la deuxième entrée du quatrième port de sortie (14),
**en ce que** la sortie du cinquième port de sortie (17) est raccordée à une ligne de signaux MEM_Out_Slc1_Left (30) et la deuxième entrée d'un cinquième port de sortie (17) est raccordée à une ligne de signaux RFU_In_Slc1_Left (31) et simultanément à la deuxième entrée de la deuxième porte logique (16),
**en ce que** la sortie du sixième port de sortie (18) est branchée à une ligne de signaux RFU_Out_Slc1_Left (32), en ce qu'une ligne de signaux RFU_In_Slc0_Right (36) est en liaison avec une ligne de signaux MEM_Out_Slc0_Right (33),
**en ce qu'**une ligne de signaux RFU_Out_Slc0_Right (35) est en liaison avec une ligne de signaux MEM_In_Slc0_Right (34),
**en ce qu'**une ligne de signaux RFU_In_Slc0_Left (39) est en liaison avec une ligne de signaux MEM_Out_Slc0_Left (37), et
**en ce qu'**une ligne de signaux RFU_Out_Slc0_Left (40) est en liaison avec une ligne de signaux MEM_In_Slc0_Left (38).

7. Arrangement selon la revendication 4, **caractérisé**
**en ce que** le multiplexeur est réalisé sous la forme d'un multiplexeur dual-slice à 2 directions (62) dans lequel une ligne de signaux ICU_In_Right (21) est raccordée à une première entrée d'un troisième amplificateur de signaux d'entrée (41) et simultanément à une première entrée d'un septième port de sortie (49) dont la sortie est raccordée à la ligne de signaux ICU_Out_Right (23),
**en ce que** la sortie du troisième amplificateur de signaux d'entrée (41) est reliée à une première entrée d'un huitième port de sortie (42) et simultanément à une première entrée d'un neuvième port de sortie (43) ainsi qu'à une première entrée d'une troisième porte logique (45),
**en ce que** la deuxième entrée du neuvième port de sortie (43) est reliée à la ligne de signaux MEM_In_Slc1_Right (25) et simultanément à la deuxième entrée de la troisième porte logique (45) ainsi qu'à une première entrée d'une quatrième porte logique (51), et dont la sortie est branchée à une première entrée d'une cinquième porte logique (53),
**en ce que** la sortie du huitième port de sortie (42) est raccordée à une ligne de signaux MEM_Out_Slc1_Right (26) et sa deuxième entrée est raccordée d'autre part à une ligne de signaux RFU_In_Slc1_Right (28) et simultanément à la troisième entrée de la troisième porte logique (45) et de plus à la deuxième entrée de la quatrième porte logique (51),
**en ce que** la sortie du neuvième port de sortie (43) est branchée à une ligne de signaux RFU_Out_Slc1_Right (27),
**en ce que** la sortie de la troisième porte logique (45) est reliée à une première entrée d'un quinzième port de sortie (56) et simultanément à une première entrée d'un seizième port de sortie (57) dont la sortie est reliée d'autre part à la ligne de signaux RFU_Out_Slc0_Right (35),
**en ce que** la ligne de signaux RFU_In_Slc0_Right (36) est en liaison avec la deuxième entrée du quinzième port de sortie (56) et de plus avec une première entrée d'une dixième porte logique (60), sa sortie étant branchée à la deuxième entrée de la cinquième porte logique (53),
**en ce que** la deuxième entrée de la dixième porte logique (60) est raccordée à la ligne de signaux MEM_In_Slc0_Right (34) et de plus à la deuxième entrée du seizième port de sortie (57),
**en ce que** la sortie du quinzième port de sortie (56) est reliée à la ligne de signaux MEM_Out_Slc0_Right (33),
**en ce que** la sortie de la cinquième porte logique (53) est branchée à la deuxième entrée du septième port de sortie (49),
**en ce qu'**une ligne de signaux ICU_In_Left (24) est raccordée à une première entrée d'un quatrième amplificateur de signaux d'entrée (58) et simultanément à une première entrée d'un dixième port de sortie (44) dont la sortie est raccordée à la ligne de signaux ICU_Out_Left (22),
**en ce que** la sortie du quatrième amplificateur de signaux d'entrée (58) est reliée à une première entrée d'un treizième port de sortie (55) et simultanément à une première entrée d'un quatorzième port de sortie (50) ainsi qu'à une première entrée d'une neuvième porte logique (59),
**en ce que** la deuxième entrée du quatorzième port de sortie (50) est reliée à la ligne de signaux RFU_In_Slc0_Left (39) et simultanément à la deuxième entrée de la neuvième porte logique (59) ainsi qu'à une première entrée d'une huitième porte logique (54) dont la sortie est branchée à une première entrée d'une septième porte logique (52),
**en ce que** la sortie du treizième port de sortie (55) est raccordée à une ligne de signaux RFU_Out_Slc0_Left (40) et sa deuxième entrée d'autre part à une ligne de signaux MEM_In_Slc0_Left (38) et simultanément à la troisième entrée de la neuvième porte logique (59) et de plus à la deuxième entrée de la huitième porte logique (54),
**en ce que** la sortie du quatorzième port de sortie (50) est branchée à une ligne de signaux MEM_Out_Slc0_Left (37),
**en ce que** la sortie de la neuvième porte logique (59) est reliée à une première entrée d'un onzième port de sortie (47) et simultanément à une première entrée d'un douzième port de sortie (48) dont la sortie est reliée d'autre part à la ligne de signaux RFU_Out_Slc1_Left (32),
**en ce qu'**une ligne de signaux MEM_In_Slc1_Left (29) est en liaison avec la deuxième entrée du douzième port de sortie (48) et de plus avec une première entrée d'une sixième porte logique (46), sa sortie étant branchée à la deuxième entrée de la septième porte logique (52)
**en ce que** la deuxième entrée de la sixième porte logique (46) est raccordée à la ligne de signaux RFU_In_Slc1_Left (31) et de plus à la deuxième entrée du onzième port de sortie (47) dont la sortie est reliée à la ligne de signaux MEM_Out_Slc1_Left (30),
**en ce que** la sortie de la septième porte logique (52) est branchée à la deuxième entrée du septième port de sortie (49).
